# EUROPEAN PATENT APPLICATION

(11) **EP 4 765 280 A1**
(43) Date of publication of application: **24.06.2026**
(21) Application number: 24864095.5
(22) Date of filing: 17.05.2024
(51) Int. Cl.: H01M 10/052, H01M 10/0567, H01M 50/204, H01M 50/249

(54) **BATTERY AND ELECTRIC DEVICE**

(30) Priority: 13.09.2023 CN 202311180181
(71) Applicant: Contemporary Amperex Technology Co., Limited, Ningde, Fujian 352100 (CN)
(72) Inventor: FENG, Fuxiang, Ningde, Fujian 352100 (CN); WANG, Hansen, Ningde, Fujian 352100 (CN); GE, Xiaoming, Ningde, Fujian 352100 (CN); WAN, Pan, Ningde, Fujian 352100 (CN); ZHANG, Rupeng, Ningde, Fujian 352100 (CN); WANG, Yuchun, Ningde, Fujian 352100 (CN); HUANG, Shengyuan, Ningde, Fujian 352100 (CN)
(74) Representative: Gong, Jinping
(86) International application number: PCT/CN2024/094012
(87) International publication number: WO 2025/055370

(57) **Abstract**

A battery and an electrical device. The battery comprises an electrolyte solution. The electrolyte solution comprises a first diluent, the first diluent comprising at least one of the compounds represented by formulas (I) to (IV), 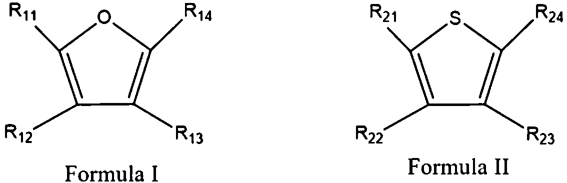 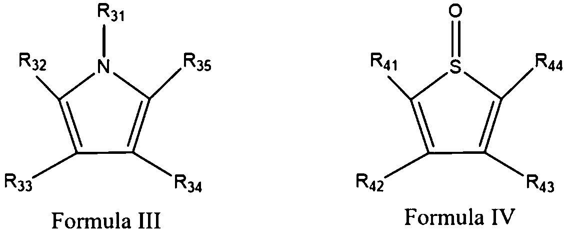 where R₁₁, R₁₂, R₁₃, R₁₄, R₂₁, R₂₂, R₂₃, R₂₄, R₃₁, R₃₂, R₃₃, R₃₄, R₃₅, R₄₁, R₄₂, R₄₃ and R₄₄ each independently comprise any one of H, F, Cl, Br, I, alkyl having 1-3 carbon atoms, and haloalkyl having 1-3 carbon atoms, and at least one of R₁₁, R₁₂, R₁₃ and R₁₄ comprises any one of haloalkyl having 1-3 carbon atoms, F, Cl, Br and I. The battery comprising the electrolyte solution of the present application has good cycling life.

## Description

### PRIORITY INFORMATION

The present application claims priority and benefits of patent application 202311180181.6 filed with the China National Intellectual Property Administration on September 13, 2023, which is incorporated herein by reference in its entirety.

### TECHNICAL FIELD

The present application belongs to the technical field of secondary batteries and particularly relates to a battery and an electrical device.

### BACKGROUND

Secondary batteries have not only been applied to energy storage power source systems such as hydraulic, firepower, wind and solar power stations but have also widely applied to many fields, e.g., electric transportation vehicles such as electric bicycles, electric motorcycles, and electric automobiles, military equipment and aerospace.

Diluents are often used in electrolyte solutions of secondary batteries. However, existing secondary batteries containing diluents have a short cycling life.

### SUMMARY OF THE INVENTION

In view of the technical problems existing in the Background, the present application provides a battery, aiming to solve the problem of batteries containing same having a short cycling life.

In order to achieve the above object, a first aspect of the present application provides a battery, comprising an electrolyte solution. The electrolyte solution comprises a first diluent, and the first diluent comprises at least one of compounds represented by formula I to formula IV: 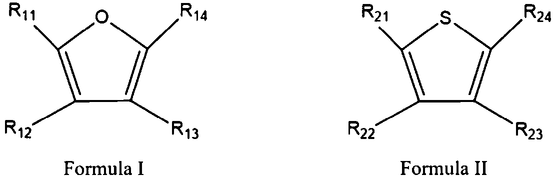 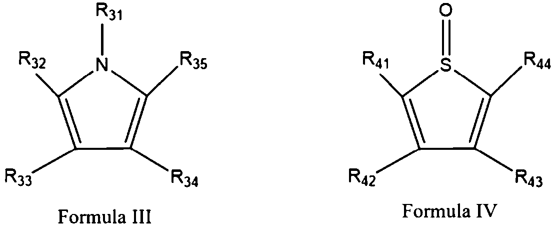
where in formula I, R₁₁, R₁₂, R₁₃, and R₁₄ each independently comprise any one of H, F, Cl, Br, I, alkyl having 1-3 carbon atoms, and a haloalkyl having 1-3 carbon atoms, and at least one of R₁₁, R₁₂, R₁₃, and R₁₄ comprises any one of haloalkyl having 1-3 carbon atoms, F, Cl, Br and I;
in formula II, R₂₁, R₂₂, R₂₃, and R₂₄ are each independently selected from any one of H, F, Cl, Br, I, alkyl having 1-3 carbon atoms, and haloalkyl having 1-3 carbon atoms;
in formula III, R₃₁, R₃₂, R₃₃, R₃₄, and R₃₅ are each independently selected from any one of H, F, Cl, Br, I, alkyl having 1-3 carbon atoms, and haloalkyl having 1-3 carbon atoms; and
in formula IV, R₄₁, R₄₂, R₄₃, and R₄₄ are each independently selected from any one of H, F, Cl, Br, I, alkyl having 1-3 carbon atoms, and haloalkyl having 1-3 carbon atoms.

The present application includes at least the following beneficial effects: in the present application, the electrolyte solution comprises a first diluent, and the solubility of the lithium salt in the first diluent is small, so that the first diluent has little effect on the concentration of the lithium salt in the electrolyte solution, and the viscosity of the electrolyte solution can be reduced and the wettability can be improved without changing the solvation structure of the electrolyte solution, thereby improving the cycling performance of the battery containing same.

In some embodiments of the present application, in formula II, at least one of R₂₁, R₂₂, R₂₃, and R₂₄ comprises any one of haloalkyl having 1-3 carbon atoms, F, Cl, Br, and I. Thus, the cycling life of the secondary battery can be prolonged.

In some embodiments of the present application, in formula III, at least one of R₃₁, R₃₂, R₃₃, R₃₄, and R₃₅ comprises any one of haloalkyl having 1-3 carbon atoms, F, Cl, Br, and I. Thus, the cycling life of the secondary battery can be prolonged.

In some embodiments of the present application, in formula IV, at least one of R₄₁, R₄₂, R₄₃, and R₄₄ comprises any one of haloalkyl having 1-3 carbon atoms, F, Cl, Br, and I. Thus, the cycling life of the secondary battery can be prolonged.

In some embodiments of the present application, the compound represented by formula I includes at least one of compounds I5 to I12:

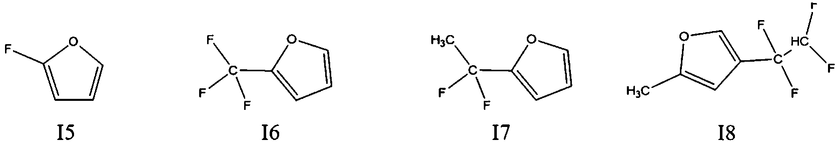

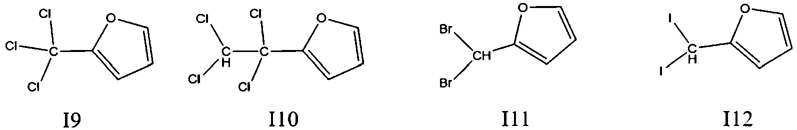

Therefore, the first diluent is at least one of the above substances, which can increase the cycling life of the secondary battery.

In some embodiments of the present application, the compound represented by formula II includes at least one of compounds II1 to II12:

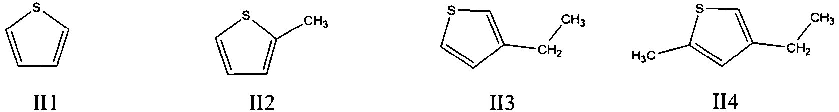

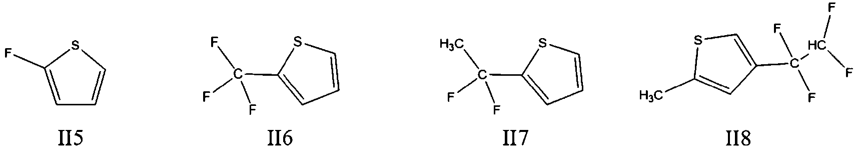

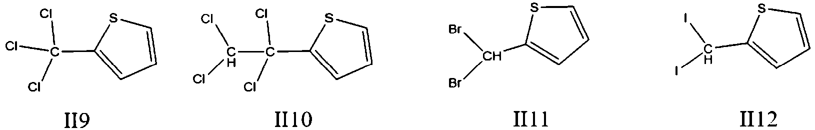

Therefore, the first diluent is at least one of the above substances, which can increase the cycling life of the secondary battery.

In some embodiments of the present application, the compound represented by formula III includes at least one of compounds III1 to III12:

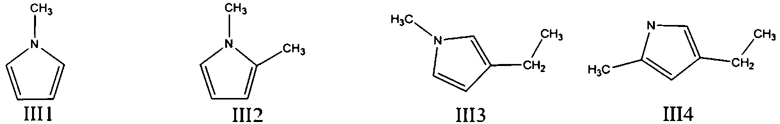

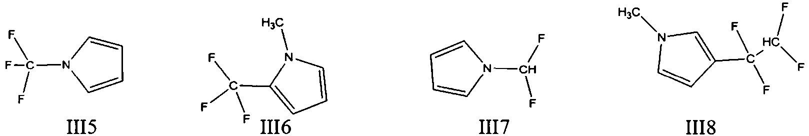

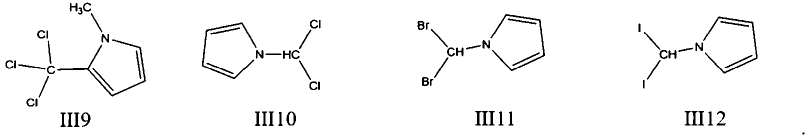

Therefore, the first diluent is at least one of the above substances, which can increase the cycling life of the secondary battery.

In some embodiments of the present application, the compound represented by formula IV includes at least one of compounds IV1 to IV12:

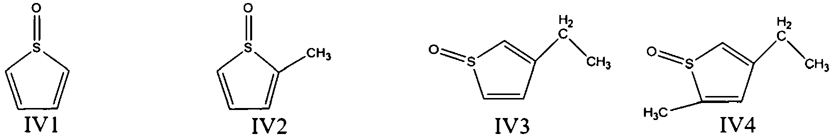

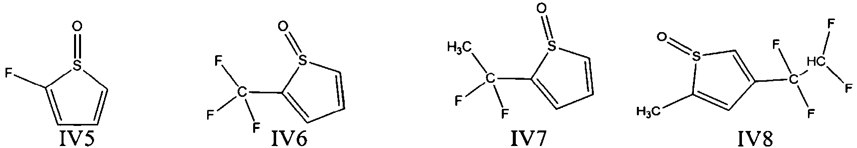

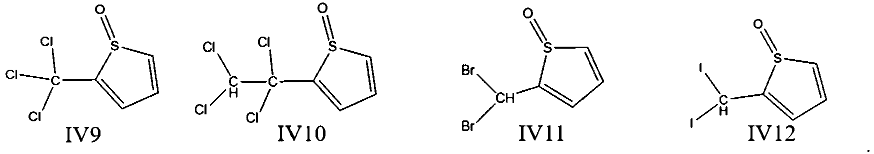

Therefore, the first diluent is at least one of the above substances, which can increase the cycling life of the secondary battery.

In some embodiments of the present application, the electrolyte solution further comprises a lithium salt, the lithium salt including at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, or lithium tetrafluoro(oxalato)phosphate. Thus, the cycling life of the secondary battery can be prolonged.

In some embodiments of the present application, the electrolyte solution further comprises a solvent, the solvent including at least one of methyl n-butyl ether, tetrahydrofuran, ethylene glycol dimethyl ether, ethylene glycol diethyl ether, propylene glycol dimethyl ether, 1,2-dimethoxypropane, or 1,3-dimethoxypropane. Thus, the above substances have good solubility for lithium salts and strong antioxidant ability, which can improve the cycling life of the secondary battery.

In some embodiments of the present application, the electrolyte solution further comprises a solvent, and the ratio of the amount of substance of the solvent to the amount of substance of the first diluent is 0.2-2. Thus, within the above range of the ratio of the amount of substance of the lithium salt to the amount of substance of the solvent, a locally high-concentration electrolyte solution can be formed. This electrolyte solution has the advantages of a high lithium salt concentration and a low viscosity and can improve the cycling life of the secondary battery.

In some embodiments of the present application, the electrolyte solution further comprises a lithium salt and a solvent, and the ratio of the amount of substance of the lithium salt to the amount of substance of the solvent is 1:(0.8-3). Thus, within the above range of the ratio of the amount of substance of the lithium salt to the amount of substance of the solvent, a locally high-concentration electrolyte solution can be formed. This electrolyte solution has the advantages of a high lithium salt concentration and a low viscosity and can improve the cycling life of the secondary battery.

In some embodiments of the present application, the electrolyte solution further comprises a second diluent, the second diluent including at least one of 1,1,2,2-tetrafluoroethyl-2,2,3,3-tetrafluoropropyl ether, 1,1,2,2-tetrafluoroethyl-2,2,2-trifluoroethyl ether, 1-(1,1,2,2-tetrafluoroethoxy)propane, 1,1,2,2-tetrafluoroethyl ethyl ether, bis(2,2,2-trifluoroethyl) ether, benzene, or anisole. Thus, the second diluent is used in combination with the first diluent, so that the electrolyte solution has a low melting point and a high boiling point, which broadens the application scenarios of the electrolyte solution and improves the cycling life of the secondary battery. In addition, the price of the second diluent is low, which reduces the cost of the electrolyte solution.

In some embodiments of the present application, in the electrolyte solution, the ratio of the amount of substance of the second diluent to the amount of substance of the first diluent is b, with 0 < b ≤ 2. Thus, when the ratio of the amount of substance of the second diluent to the amount of substance of the first diluent is within the above range, the cycling life of the secondary battery is long.

In some embodiments of the present application, in the electrolyte solution, the amount of substance of the solvent is m, the amount of substance of the first diluent is p, and the amount of substance of the second diluent is q, with 0.2 ≤ m/(p+q) ≤ 2. When the ratio of the amount of substance of the solvent to the amount of substance of the diluent (the first diluent and the second diluent) is within the above range, the cycling life of the secondary battery can be improved.

In some embodiments of the present application, the battery comprises a lithium metal negative electrode plate comprising a negative electrode current collector and an active material layer arranged on at least part of a surface of the negative electrode current collector, and the active material layer comprises at least one of elemental lithium metal or a lithium metal alloy. By utilizing the low operating voltage and high specific capacity of lithium, the energy density of the battery is greatly improved.

In some embodiments of the present application, the lithium metal alloy has a chemical formula of LiR, where R includes at least one of tin, zinc, aluminum, magnesium, silver, gold, gallium, indium, platinum, boron, carbon, or silicon. Thus, the battery has an excellent cycling life.

A second aspect of the present application provides an electrical device, which comprises the battery according to the first aspect.

Additional aspects and advantages of the present application will be set forth in part in the description which follows, and in part will be obvious from the description which follows, or may be learned by practice of the present application.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural view of a battery cell according to an embodiment of the present application;
FIG. 2 is a schematic structural view of a battery module according to an embodiment of the present application;
FIG. 3 is a schematic structural view of a battery pack according to an embodiment of the present application;
FIG. 4 is an exploded view of FIG. 3;
FIG. 5 is a schematic view of an embodiment of an electrical device in which a battery is used as a power source;
FIG. 6 is a scanning electron microscope image of a negative electrode plate of a secondary battery according to Example 2 of the present application after 30 cycles;
FIG. 7 is a scanning electron microscope image of a negative electrode plate of a secondary battery according to Example 3 of the present application after 30 cycles; and
FIG. 8 is a scanning electron microscope image of a negative electrode plate of a secondary battery according to Example 15 of the present application after 30 cycles.

Description of reference numerals:
1: Battery pack; 2: upper box; 3: lower box; 4: battery module; and 5: battery cell.

### DETAILED DESCRIPTION

The embodiments of the technical solution of the present application will be described in detail below. The following embodiments are only used to more clearly illustrate the technical solutions of the present application, therefore only as examples, and cannot be used to limit the scope of protection of the present application.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

For conciseness, only certain numerical ranges are explicitly disclosed herein. However, any lower limit can be combined with any upper limit to form a range that is not explicitly recited; any lower limit can be combined with another lower limit to form a range that is not explicitly recited; and any upper limit may be combined with another upper limit to form a range that is not explicitly recited. Moreover, each separately disclosed point or single numerical value itself can be used as a lower or upper limit to form a range, which is not explicitly stated, in combination with any other point or single numerical value or with other lower or upper limits.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

With the technical development and increasing demand of electric vehicles and rechargeable mobile devices, the research work related to secondary batteries, as a representative of the new energy field, is also developing rapidly. Secondary batteries have a small volume and weight, which makes it easy to carry and use, and they have a relatively high specific energy and can provide a larger amount of energy storage; in addition, lithium-ion batteries have no memory effect and do not need to be fully discharged before recharging, so secondary batteries have broad application prospects.

In secondary batteries, taking lithium batteries as an example, the solvation structure of Li⁺ in the electrolyte solution plays an important role in determining the properties of the solid electrolyte interphase (SEI) film. In a low lithium salt concentration electrolyte solution, due to the presence of a large amount of solvent, Li⁺easily forms a solvation sheath mainly composed of the solvent, and thus, an SEI film produced by solvent decomposition is usually obtained; as the concentration of the lithium salt increases, due to the lack of free solvent, a higher concentration is conducive to more anions participating in the solvation sheath around Li⁺, so an anion-derived SEI film mainly composed of an inorganic component can be produced, thereby achieving uniform and rapid transmission of Li⁺. However, an electrolyte solution with a high lithium salt concentration often has problems such as a high viscosity, a low wettability, and a low ion conductivity.

In the present application, the electrolyte solution comprises a first diluent, and the first diluent is a five-membered ring. The two conjugated double bonds on the five-membered rings of formulas I to IV can delocalize a lone pair of electrons of the heteroatom, significantly weakening the ability of the first diluent to dissolve the lithium salt and improve the antioxidant properties thereof. The solubility of the lithium salt in the first diluent is small, and the viscosity of the electrolyte solution can be reduced and the wettability can be improved without changing the solvation structure of the electrolyte solution, thereby improving the cycling performance of the battery containing same.

The battery disclosed in the embodiments of the present application can be used in an electrical device in which a battery is used as a power source or in various energy storage systems in which a battery is used as an energy storage element. The electrical device can include, but is not limited to, a mobile phone, a tablet, a laptop, an electric toy, an electric tool, a storage battery car, an electric vehicle, a ship, a spacecraft, etc. Electric toys can include fixed or mobile electric toys, e.g., game consoles, electric car toys, electric ship toys, and electric airplane toys, and the spacecraft can include airplanes, rockets, space shuttles, spaceships, etc.

A first aspect of the present application provides a battery, comprising an electrolyte solution. The electrolyte solution comprises a first diluent, and the first diluent comprises at least one of compounds represented by formula I to formula IV: 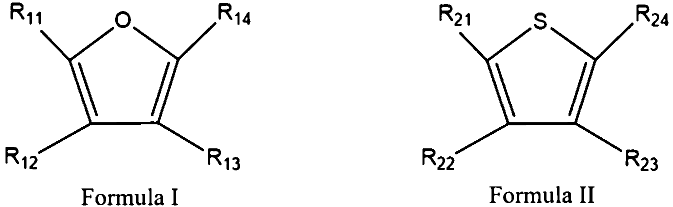 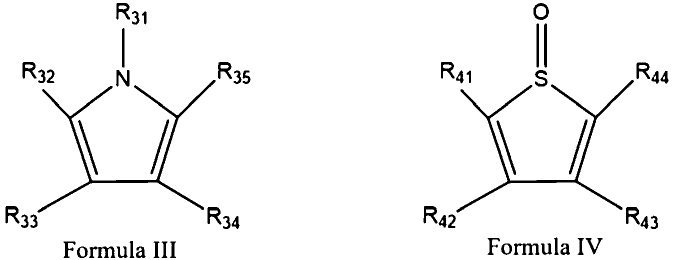
where in formula I, R₁₁, R₁₂, R₁₃, and R₁₄ each independently comprise any one of H, F, Cl, Br, I, alkyl having 1-3 carbon atoms, and a haloalkyl having 1-3 carbon atoms, and at least one of R₁₁, R₁₂, R₁₃, and R₁₄ comprises any one of haloalkyl having 1-3 carbon atoms, F, Cl, Br and I;
in formula II, R₂₁, R₂₂, R₂₃, and R₂₄ are each independently selected from any one of H, F, Cl, Br, I, alkyl having 1-3 carbon atoms, and haloalkyl having 1-3 carbon atoms;
in formula III, R₃₁, R₃₂, R₃₃, R₃₄, and R₃₅ are each independently selected from any one of H, F, Cl, Br, I, alkyl having 1-3 carbon atoms, and haloalkyl having 1-3 carbon atoms; and
in formula IV, R₄₁, R₄₂, R₄₃, and R₄₄ are each independently selected from any one of H, F, Cl, Br, I, alkyl having 1-3 carbon atoms, and haloalkyl having 1-3 carbon atoms.

It can be understood that in haloalkyl having 1-3 carbon atoms, the haloalkyl refers to alkyl in which at least one H atom is replaced by a halogen atom, and by way of example, the halogen atom can include F, Cl, Br, and I.

The present application includes at least the following beneficial effects: in the electrolyte solution of the present application, the first diluent includes at least one of compounds represented by formula I to formula IV. O in formula I, S in formula II, N in formula III, and S=O in formula IV have weak electron-donating abilities and good compatibility with the electrolyte solution. In addition, formula I to formula IV are five-membered ring small molecules, and the two conjugated double bonds on the five-membered ring can delocalize a lone pair of electrons of the heteroatom (an atom other than the carbon atoms, for example, the O atom in formula I), which significantly weakens the ability of the first diluent to dissolve the lithium salt and improves the antioxidant properties of the first diluent. The first diluent, as an inert component in the electrolyte solution, does not participate in a reaction, and can reduce the viscosity of the electrolyte solution and improve the wettability without changing the solvation structure of the electrolyte solution, which is conducive to the production of an anion-derived SEI film mainly composed of an inorganic component, thereby realizing uniform and rapid transmission of Li⁺, thus improving the cycling performance of a battery containing same.

In some embodiments of the present application, in formula I, at least one of R₁₁, R₁₂, R₁₃, and R₁₄ comprises any one of haloalkyl having 1-3 carbon atoms, F, Cl, Br, and I. Specifically, halogens such as F, Cl, Br, and I are electron-withdrawing groups. Substitution with an electron-withdrawing group on the five-membered ring reduces the electron-donating ability of the heteroatom, thereby reducing the solubility of the lithium salt in the first diluent, while improving the antioxidant properties of the first diluent, so that the cycling life of the secondary battery can be improved.

In addition, the above substitution with a halogen can improve the redox stability of the electrolyte solution and can reduce the flammability of the electrolyte solution. The first diluent containing a halogen results in the formation of an SEI film with a better stability and a high conductivity, which can further improve the cycling life of the secondary battery.

In addition, when the first diluent contains haloalkyl having 1-3 carbon atoms, the boiling point of the first diluent can be increased, and an electrolyte solution with wide melting and boiling points can be formed, which broadens the application scenarios of the electrolyte solution and improves the cycling life of the secondary battery. In addition, the price of the second diluent is low, which reduces the cost of the electrolyte solution.

In some embodiments of the present application, in formula II, at least one of R₂₁, R₂₂, R₂₃, and R₂₄ comprises any one of haloalkyl having 1-3 carbon atoms, F, Cl, Br, and I. Specifically, halogens such as F, Cl, Br, and I are electron-withdrawing groups. Substitution with an electron-withdrawing group on the five-membered ring can reduce the solubility of the lithium salt in the first diluent, while improving the antioxidant properties of the first diluent, so that the cycling life of the secondary battery can be improved.

In some embodiments of the present application, in formula III, at least one of R₃₁, R₃₂, R₃₃, R₃₄, and R₃₅ comprises any one of haloalkyl having 1-3 carbon atoms, F, Cl, Br, and I. Specifically, halogens such as F, Cl, Br, and I are electron-withdrawing groups. Substitution with an electron-withdrawing group on the five-membered ring can reduce the solubility of the lithium salt in the first diluent, while improving the antioxidant properties of the first diluent, so that the cycling life of the secondary battery can be improved.

In some embodiments of the present application, in formula IV, at least one of R₄₁, R₄₂, R₄₃, and R₄₄ comprises any one of haloalkyl having 1-3 carbon atoms, F, Cl, Br, and I. Specifically, halogens such as F, Cl, Br, and I are electron-withdrawing groups. Substitution with an electron-withdrawing group on the five-membered ring can reduce the solubility of the lithium salt in the first diluent, while improving the antioxidant properties of the first diluent, so that the cycling life of the secondary battery can be improved.

In some embodiments of the present application, the compound represented by formula I includes at least one of compounds I5 to I12:

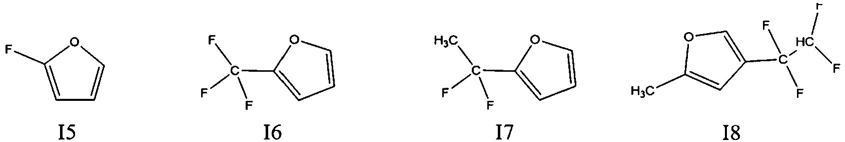

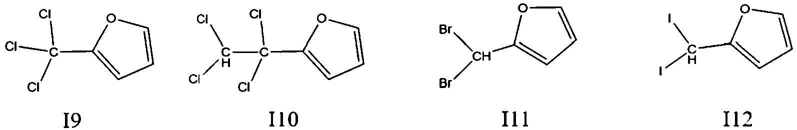

Specifically, the above substances are low in cost and easily available, and the first diluent is at least one of the above substances, which can increase the cycling life of the secondary battery.

In some embodiments of the present application, the compound represented by formula II includes at least one of compounds II1 to II12:

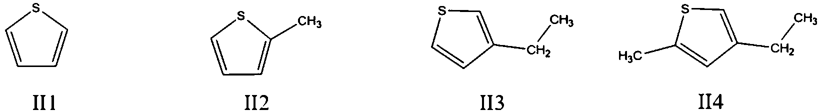

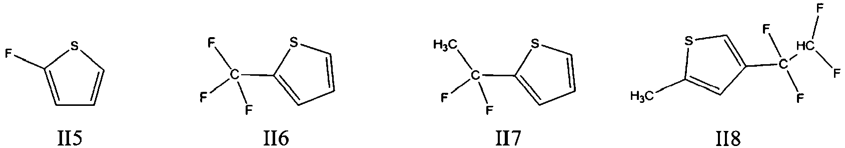

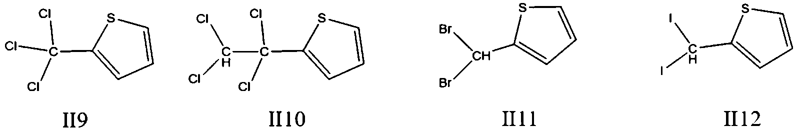

Specifically, the above substances are low in cost and easily available, and the first diluent is at least one of the above substances, which can increase the cycling life of the secondary battery.

In some embodiments of the present application, the compound represented by formula III includes at least one of compounds III1 to III12:

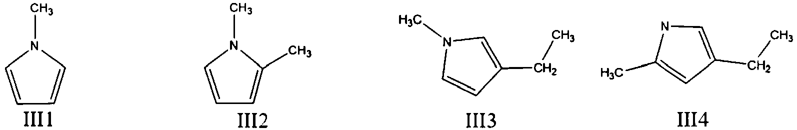

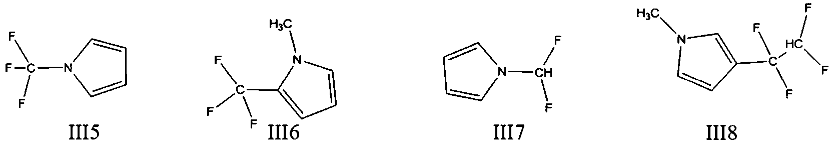

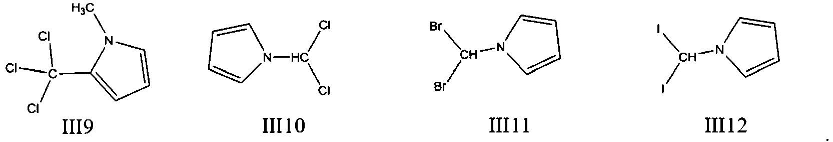

Specifically, the above substances are low in cost and easily available, and the first diluent is at least one of the above substances, which can increase the cycling life of the secondary battery.

In some embodiments of the present application, the compound represented by formula IV includes at least one of compounds IV1 to IV12:

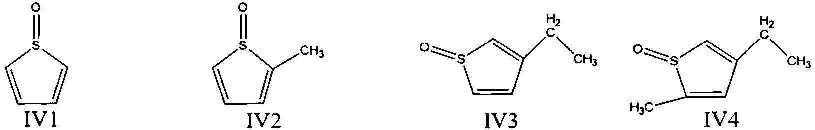

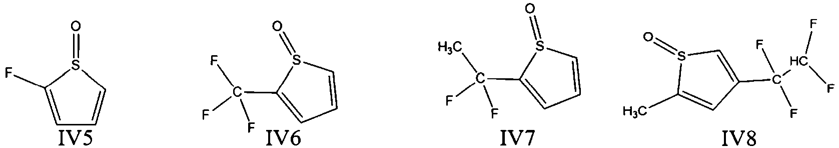

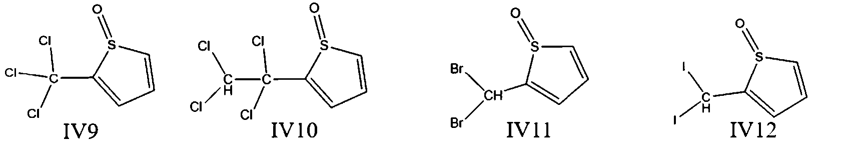

Specifically, the above substances are low in cost and easily available, and the first diluent is at least one of the above substances, which can increase the cycling life of the secondary battery.

It can be understood that the compounds represented by the above formula I to formula IV in the embodiments of the present application can be either purchased or prepared by a commonly used preparation method in the art.

In some embodiments of the present application, the electrolyte solution further comprises a lithium salt, the lithium salt including at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, or lithium tetrafluoro(oxalato)phosphate. Specifically, the above lithium salt has a small solubility in the first diluent, and lithium salt-solvent clusters are dispersed in the first diluent. The introduction of the first diluent reduces the overall salt concentration in the electrolyte solution, while retaining the local coordination environment of the high-concentration salt-solvent clusters in the electrolyte solution, which can improve the cycling life of the secondary battery. In some other embodiments of the present application, the lithium salt includes at least one of lithium bis(fluorosulfonyl)imide or lithium difluoro(oxalato)borate.

In some embodiments of the present application, the electrolyte solution further comprises a solvent, the solvent including at least one of methyl n-butyl ether, tetrahydrofuran, ethylene glycol dimethyl ether, ethylene glycol diethyl ether, propylene glycol dimethyl ether, 1,2-dimethoxypropane, or 1,3-dimethoxypropane. Thus, the above substances are ether solvents that have good solubility for lithium salts and strong antioxidant ability, which can improve the cycle life of the secondary battery.

In addition, the first diluent of the present application has good compatibility with the solvent in the electrolyte solution, so that the electrolyte solution forms a clear and uniform solution, reduces the probability of phase separation, and makes the electrolyte solution have sufficient stability; and the first diluent has a relatively low viscosity, which reduces the overall viscosity of the electrolyte solution.

In some embodiments of the present application, the electrolyte solution further comprises a solvent, and the ratio of the amount of substance of the solvent to the amount of substance of the first diluent is 0.2-2. Specifically, the ratio of the amount of substance of the solvent to the amount of substance of the first diluent can be 0.2-1.9, 0.3-1.8, 0.4-1.7, 0.5-1.6, 0.6-1.5, 0.7-1.4, 0.8-1.3, 0.9-1.2, 1-1.1, etc. Thus, within the above range of the ratio of the amount of substance of the lithium salt to the amount of substance of the solvent, a locally high-concentration electrolyte solution can be formed. This electrolyte solution has the advantages of a high lithium salt concentration and a low viscosity and can improve the cycling life of the secondary battery. In addition, on the one hand, the ability of the first diluent to dissolve the lithium salt can be reduced and the oxidation resistance of the electrolyte solution can be improved; on the other hand, the reduced boiling point of the electrolyte solution caused by an excessive high content thereof can be reduced, which reduces the probability of gas production and thermal runaway in the battery, thereby further improving the cycling performance of the battery.

In some embodiments of the present application, the electrolyte solution further comprises a lithium salt and a solvent, and the ratio of the amount of substance of the lithium salt to the amount of substance of the solvent is 1:(0.8-3). Specifically, the ratio of the amount of substance of the lithium salt to the amount of substance of the solvent can be 1:(0.8-2.9), 1:(1-2.5), 1:(1.5-2), 1:(1.8-2), etc. Within the above range of the ratio of the amount of substance of the lithium salt to the amount of substance of the solvent, a locally high-concentration electrolyte solution can be formed, the concentration of the lithium salt in the solvent is high (greater than 3 mol/L), and the solubility of the lithium salt in the first diluent is small. Lithium salt-solvent clusters are dispersed in the first diluent. The introduction of the first diluent reduces the overall salt concentration in the electrolyte solution while retaining the local coordination environment of high-concentration salt-solvent clusters in the electrolyte solution, which can improve the cycling life of the secondary battery. In some other embodiments of the present application, the ratio of the amount of substance of the lithium salt to the amount of substance of the solvent is 1:(1-2).

In some embodiments of the present application, the electrolyte solution further comprises a second diluent, the second diluent including at least one of 1,1,2,2-tetrafluoroethyl-2,2,3,3-tetrafluoropropyl ether, 1,1,2,2-tetrafluoroethyl-2,2,2-trifluoroethyl ether, 1-(1,1,2,2-tetrafluoroethoxy)propane, 1,1,2,2-tetrafluoroethyl ethyl ether, bis(2,2,2-trifluoroethyl) ether, benzene, or anisole. Specifically, the second diluent and the first diluent are both inert components and are used in combination. On the one hand, they can reduce the viscosity of the electrolyte solution and improve the wettability without changing the solvation structure of the electrolyte solution, which is beneficial to the production of an anion-derived SEI film mainly composed of an inorganic component, realizing the uniform and rapid transmission of Li⁺, thereby improving the cycling performance of the battery containing same; on the other hand, the first diluent has a high melting point and the second diluent has a low melting point. The combined use of the two makes the electrolyte solution have a low melting point and a high boiling point, which broadens the application scenarios of the electrolyte solution, and the second diluent has a low price, which reduces the cost of the electrolyte solution.

In some embodiments of the present application, the concentration of the amount of substance of the lithium salt in the diluent (the first diluent and/or the second diluent) is lower than 0.25 M. For example, the concentration of the amount of substance of the lithium salt in the diluent (the first diluent and/or the second diluent) is 0.02-0.25 M, 0.05-0.2 M, 0.15-0.2 M, etc., which can reduce the viscosity of the electrolyte solution and improve the wettability without changing the solvation structure of the electrolyte solution, which makes it beneficial to the production of an anion-derived SEI film mainly composed of an inorganic component, realizing the uniform and rapid transmission of Li⁺, thus improving the cycling performance of the battery containing same.

In some embodiments of the present application, in the electrolyte solution, the ratio of the amount of substance of the second diluent to the amount of substance of the first diluent is b, with 0 < b ≤ 2. Specifically, b can satisfy 0 < b ≤ 1.9, 0.1 ≤ b ≤ 1.8, 0.3 ≤ b ≤ 1.6, 0.5 ≤ b ≤ 1.5, 0.7 ≤ b ≤ 1.3, 0.8 ≤ b ≤ 1, etc. The ratio of the amount of substance of the second diluent to the amount of substance of the first diluent is within the above range, so that the electrolyte solution has a low melting point and a high boiling point, which broadens the application scenarios of the electrolyte solution, and it is also possible to form a locally high-concentration electrolyte solution, thereby improving the cycling life of the secondary battery. The price of the second diluent is low, which reduces the cost of the electrolyte solution.

In some embodiments of the present application, in the electrolyte solution, the amount of substance of the solvent is m, the amount of substance of the first diluent is p, and the amount of substance of the second diluent is q, with 0.2 ≤ m/(p+q) ≤ 2. For example, the value of m/(p+q) can be 0.2-1.9, 0.3-1.7, 0.5-1.5, 0.7-1.4, 0.9-1.3, 1-1.2, etc., where m/(p+q) represents the ratio of the amount of substance of the solvent to the amount of substance of the diluent (the first diluent and the second diluent) in the electrolyte solution. Within the range of the above-mentioned ratio of the amount of substance of the solvent to the amount of substance of the diluent, a locally high-concentration electrolyte solution can be formed. The solubility of the lithium salt in the diluent is small, and lithium salt-solvent clusters are dispersed in the diluent. The diluent can reduce the overall salt concentration in the electrolyte solution while retaining the local coordination environment of the high-concentration salt-solvent clusters in the electrolyte solution, thereby improving the cycling life of the secondary battery. In some embodiments of the present application, m/(p+q) = 0.2-1.

In some embodiments of the present application, the electrolyte solution further comprises an additive. For example, the additive may include a negative electrode film-forming additive, or may also include a positive electrode film-forming additive, and may further include an additive capable of improving certain performances of the battery, such as an additive for improving the overcharging performance of a battery, an additive for improving the high-temperature performance of a battery, and an additive for improving the low-temperature performance of a battery.

The electrolyte solution proposed in the present application can be prepared by the following method:
At room temperature, in a stirring mixing tank, after a solvent and a diluent are uniformly mixed, and a lithium salt is added thereto and fully stirred for dissolution to obtain an electrolyte solution.

The battery refers to a battery that can be used continually by activating an active material in a charging manner, after the battery is discharged.

It can be understood that the battery proposed in the present application is a lithium-ion battery.

Generally, the battery cell comprises a positive electrode plate, a negative electrode plate, a separator film, and an electrolyte solution. During the charging and discharging process of the battery, active metal ions (lithium ions) are intercalated and deintercalated back and forth between the positive electrode plate and the negative electrode plate. The separator film is arranged between the positive electrode plate and the negative electrode plate and serves the function of isolation. The electrolyte serves to conduct active metal ions between the positive electrode plate and the negative electrode plate.

### [Positive electrode plate]

In some embodiments of the present application, the positive electrode plate comprises a positive electrode current collector, and the positive electrode current collector can be a metal foil, a foam metal, or a composite current collector. For example, as the metal foil, aluminum or stainless steel treated with silver on the surface, copper, aluminum, nickel, a carbon electrode, carbon, titanium, etc. can be used. The composite current collector can comprise a polymer material substrate layer and a metal layer. The foam metal may be foam nickel, foam copper, foam aluminum, a foam alloy, etc. The composite current collector can be formed by forming a metal material (aluminum, aluminum alloys, nickel, nickel alloys, titanium, titanium alloys, silver and silver alloys, etc.) on a polymer material substrate (such as polypropylene, polyethylene terephthalate, polybutylene terephthalate, polystyrene, polyethylene, etc.).

In some embodiments of the present application, the positive electrode plate can further comprise a positive electrode active material layer. The positive electrode active material layer comprises a positive electrode active material. The specific type of the positive electrode active material is not limited. Active materials known in the art that can be used as active materials for positive electrodes of batteries can be used, and those skilled in the art can make a choice according to actual needs.

The positive electrode active material can include, but is not limited to, by way of example, at least one of a lithium transition metal oxide, a lithium-containing phosphate with an olivine structure, and respective modified compounds thereof. Examples of the lithium transition metal oxide can include, but are not limited to, at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. Examples of the lithium-containing phosphate with an olivine structure can include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon, and modified compounds thereof. These materials are all commercially available.

The charging and discharging process of the battery is accompanied by deintercalation and consumption of Li, and the content of the amount of substance of Li varies as the state to which the battery is discharged varies. In a list of positive electrode materials in the embodiments of the present application, the content of the amount of substance of Li is in the initial state of the material, i.e., the state before addition, and the content of the amount of substance of Li may change after the positive electrode material is applied to the battery system and subjected to charge-discharge cycling.

In a list of positive electrode materials in the embodiments of the present application, the content of the amount of substance of O is only the value in a theoretical state. The release of oxygen from a lattice causes the content of the amount of substance of oxygen to change. The practical content of the amount of substance of O may fluctuate.

The modified compound of each of the above materials can involve doping modification and/or surface coating modification of the material.

The positive electrode active material layer generally further comprises optionally a binder, a conductive agent, and other optional auxiliaries.

By way of example, the conductive agent can include at least one of superconducting carbon, acetylene black, carbon black, Ketjen black, carbon dots, carbon nanotubes, Super P (SP), graphene, and carbon nanofibers.

By way of example, the binder can include at least one of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative electrode plate]

The negative electrode plate comprises a negative electrode current collector and a negative electrode active material layer arranged on at least one surface of the negative electrode current collector, and the active material layer comprises a negative electrode active material.

For example, the negative electrode current collector has two surfaces opposite to each other in a thickness direction of the negative electrode current collector, and the active material layer is arranged on either or both of the two opposite surfaces of the negative electrode current collector.

In some embodiments of the present application, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material (copper, copper alloys, nickel, nickel alloys, titanium, titanium alloys, silver and silver alloys, etc.) on a polymer material substrate (such as substrate of polypropylene (PP), polyethylene terephthalate (PET), polybutylene terephthalate (PBT), polystyrene (PS), polyethylene (PE), etc.).

In some embodiments of the present application, the active material layer comprises a negative electrode active material, and the negative electrode active material can be a negative electrode active material well known in the art for batteries. By way of example, the negative electrode active material can comprise at least one of the following materials: artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. Only a single one of or a combination of two or more of these negative electrode active materials can be used.

In some embodiments of the present application, the battery comprises a lithium metal negative electrode plate comprising a negative electrode current collector and an active material layer arranged on at least part of a surface of the negative electrode current collector, and the active material layer comprises at least one of elemental lithium metal or a lithium metal alloy. By utilizing the low operating voltage and high specific capacity of lithium, the energy density of the battery is greatly improved. In addition, by using the electrolyte solution of the present application, the solubility of the lithium metal negative electrode plate in the diluent (the first diluent and/or the second diluent) is poor, and the use of the diluent of the present application is conducive to the generation of a solid electrolyte interphase layer (SEI) with good mechanical strength and chemical stability, thereby optimizing the performance of the SEI, reducing the probability of lithium dendrites in the lithium metal negative electrode plate, and reducing the attenuation of the life of the battery caused by lithium consumption.

In some embodiments of the present application, the lithium metal alloy has a chemical formula of LiR, where R includes at least one of tin, zinc, aluminum, magnesium, silver, gold, gallium, indium, platinum, boron, carbon, or silicon. For the active material layer, the above lithium metal alloy is used. The lithium alloy has a higher potential than lithium and has good stability in the electrolyte solution and low side reactions, which improves the stability of the lithium metal negative electrode, reduces the probability of lithium dendrites in the lithium metal negative electrode plate, and can increase the cycling life of the secondary battery.

By using the lithium metal negative electrode plate in the present application, lithium is not easily dissolved into the first diluent and/or the second diluent, nor does it easily react with the first diluent and/or the second diluent, which significantly reduces the lithium corrosion phenomenon occurring during the long-term cycling of the battery. The electrolyte solution has good compatibility with the negative electrode, and also optimizes the performance of the SEI film, inhibits the growth of lithium dendrites, and improves the cycling life of the secondary battery.

In addition, the lithium metal negative electrode plate of the present application is used in combination with an ether solvent (at least one of methyl n-butyl ether, tetrahydrofuran, ethylene glycol dimethyl ether, ethylene glycol diethyl ether, propylene glycol dimethyl ether, 1,2-dimethoxypropane, or 1,3-dimethoxypropane) in the electrolyte solution to reduce the viscosity of the electrolyte solution and achieve a better cycling effect of the lithium metal battery.

In some embodiments of the present application, when a lithium metal negative electrode plate is used, the preparation method therefor is as follows: a lithium foil or a lithium metal alloy is applied to a current collector by single-sided rolling and then cut into a negative electrode plate.

In some embodiments of the present application, when the negative electrode active material is at least one of artificial graphite, natural graphite, soft carbon, hard carbon, a silicon-based material, a tin-based material, lithium titanate, etc., the active material layer further comprises optionally a binder. The binder can be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments of the present application, when the negative electrode active material is at least one of artificial graphite, natural graphite, soft carbon, hard carbon, a silicon-based material, a tin-based material, lithium titanate, etc., the active material layer further comprises optionally a conductive agent. The conductive agent can be selected from at least one of superconducting carbon, acetylene black, carbon black, Ketjen black, carbon dots, carbon nanotubes, graphene, and carbon nanofibers.

In some embodiments of the present application, the active material layer further comprises optionally other auxiliaries, e.g., a thickener (such as sodium carboxymethyl cellulose (CMC-Na)).

In some embodiments of the present application, when the negative electrode active material is at least one of artificial graphite, natural graphite, soft carbon, hard carbon, a silicon-based material, a tin-based material, lithium titanate, etc., the negative electrode plate can be prepared by dispersing the above components for preparing the negative electrode plate, such as a negative electrode active material, a conductive agent, a binder, and any other components, in a solvent (such as deionized water) to form a negative electrode slurry; and applying the negative electrode slurry to a negative electrode current collector, and performing drying and cold pressing processes to obtain the negative electrode plate.

### [Separator film]

The above separator film is not particularly limited in the present application, and any well-known separator film having a porous structure with electrochemical stability and mechanical stability can be selected according to actual needs, for example, it can include a single-layer or multi-layer thin film comprising at least one of glass fibers, nonwoven fabric, polyethylene, polypropylene, and polyvinylidene fluoride.

In some embodiments of the present application, the charge and discharge rate of a battery cell should be controlled between 0.01-8 C. For example, the discharge rate can be 0.01-7.9 C, 0.1-7.5 C, 0.5-7 C, 1-6.5 C, 1.5-6 C, 2-5 C, 3-4 C, etc.

In some embodiments of the present application, the environment temperature for the cycling of the battery cell should be controlled between 0°C and 80°C. For example, the environment temperature for cycling can be 1-80°C, 5-75°C, 10-70°C, 20-60°C, 30-50°C, etc.

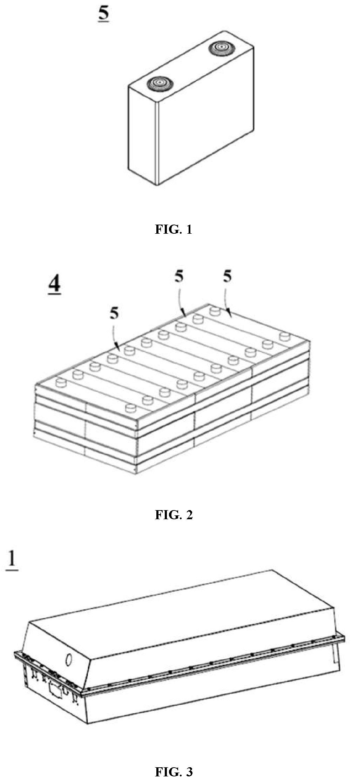

The shape of the battery cell is not specially limited in the embodiments of the present application and can be cylindrical, prismatic, or in any other shape. FIG. 1 is a battery cell 5 with a prismatic structure as an example.

In some embodiments of the present application, the battery cell 5 can comprise an outer package. The outer package can be used for encapsulating the positive electrode plate, the negative electrode plate, and the electrolyte.

In some embodiments of the present application, the outer package can comprise a case and a cover plate. The case can comprise a bottom plate and a side plate connected to the bottom plate, with the bottom plate and the side plate enclosing to form an accommodating cavity. The case has an opening in communication with the accommodating cavity, and the cover plate can cover the opening to close the accommodating cavity.

The positive electrode plate, the negative electrode plate, and the separator film can be made into an electrode assembly by a winding process or a lamination process. The electrode assembly is encapsulated into the accommodating cavity. The number of electrode assemblies contained in the battery cell can include one or more and can be adjusted according to requirements.

In some embodiments of the present application, the outer package of the battery cell can include a hard shell, such as a hard plastic shell, an aluminum shell, or a steel shell.

The outer package of the battery cell 5 may also include a soft package, such as a pouch-type soft package. The material of the soft package can be plastic, and for example may include at least one of polypropylene (PP), polybutylene terephthalate (PBT), and polybutylene succinate (PBS).

In some embodiments of the present application, battery cells can be assembled into a battery module, the number of secondary batteries included in the battery module can be multiple, and the specific number can be adjusted according to the application and capacity of the battery module.

FIG. 2 is a battery module 4 as an example. With reference to FIG. 2, in the battery module 4, a plurality of battery cells 5 can be arranged sequentially along the length direction of the battery module 4. Of course, they can also be arranged in any other manner. The plurality of battery cells 5 can be further fixed by fasteners.

The battery module 4 can further comprise a shell having an accommodating space, in which the plurality of battery cells 5 are accommodated. In some embodiments of the present application, the above battery modules can be further assembled into a battery pack, and the number of battery modules contained in the battery pack can be adjusted according to the application and capacity of the battery pack.

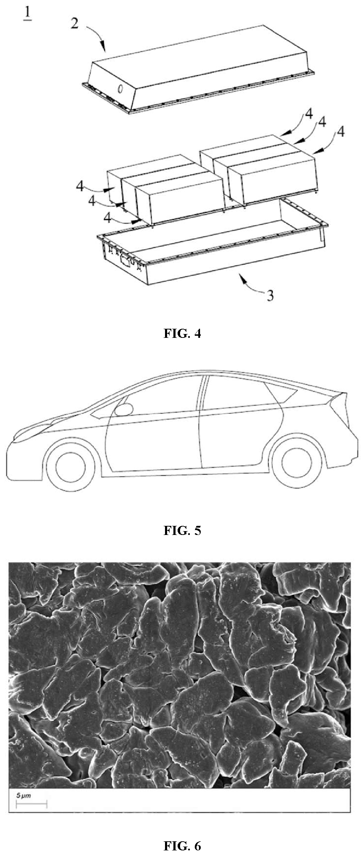

FIGs. 3 and 4 are a battery pack 1 as an example. Referring to FIGs. 3 and 4, the battery pack 1 can comprise a battery box and a plurality of battery modules 4 arranged in the battery box. The battery box comprises an upper box 2 and a lower box 3. The upper box 2 can cover the lower box 3 to form an enclosed space for accommodating the battery module 4. The plurality of battery modules 4 can be arranged in the battery box in any manner.

A third aspect of the present application provides an electrical device, which comprises the battery according to the second aspect. Specifically, the battery can be used either as a power source for the electrical device or as an energy storage unit for the electrical device. The electrical device can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, and an energy storage system.

FIG. 5 is an electrical device as an example. The electrical device includes an all-electric vehicle, a hybrid electric vehicle, or a plug-in hybrid electric vehicle.

As another example, the electrical device can include a mobile phone, a tablet, and a laptop. The electrical device is generally required to be light and thin and can use a battery as a power source.

To make the technical problem to be solved by the embodiments of the present application, the technical solutions, and the beneficial effects clearer, the present application is further described below in detail with reference to embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Example 1

### [Preparation of positive electrode plate]

The positive electrode active material lithium iron phosphate (LFP), the conductive agent acetylene black, and the binder polyvinylidene fluoride were mixed in a mass ratio of 98:1:1, and the solvent N-methylpyrrolidone was added and stirred until the system was homogeneous to obtain a positive electrode slurry. The positive electrode slurry was uniformly applied to both sides of a positive electrode current collector aluminum foil, the positive electrode current collector aluminum foil was air-dried at room temperature, then transferred to an oven for further drying, and then cut into a rectangle of 40 mm × 50 mm as a positive electrode plate, with a positive electrode areal capacity of 3.5 mAh/cm².

### [Preparation of negative electrode plate]

A lithium foil with a thickness of 50 µm was rolled to cover a copper foil with a thickness of 12 µm by single-sided rolling, and then cut into a rectangle of 41 mm × 51 mm as a negative electrode plate for later use.

### [Separator film]

A polyethylene porous film was used as the separator film.

### [Preparation of electrolyte solution]

A solvent and a first diluent were taken and uniformly mixed to obtain a transparent solution, i.e., a mixed solvent. Lithium bis(fluorosulfonyl)imide was taken and added to the previous mixed solvent, and the mixture was fully stirred to form a transparent electrolyte solution having a certain concentration. The parameters thereof are shown in Table 1.

A piece of cut positive electrode plate and two pieces of cut negative electrode plates were taken and matched with each other, and the above separator film was used therebetween to isolate the positive electrode plate from the negative electrode plate. The resulting product was wrapped in an aluminum-plastic film bag to form a laminated dry battery. The above-prepared electrolyte solution was injected, with the injection amount being 2.1 g/Ah based on the rated capacity of the battery. The aluminum-plastic film bag was subjected to vacuum hot-pressing encapsulation and left to stand at room temperature for at least 6 hours before starting a cycling test. The rated capacity of the laminated battery prepared by this method was 140 mAh.

Secondary batteries containing electrolyte solutions of Examples 2-43 and Comparative Examples 1-3 were the same as Example 1, except in that the parameters were different (see Table 1). In Example 20, the ratio of the amount of substance of I5 to the amount of substance of III5 was 1:1; in Example 21, the ratio of the amount of substance of I5 to the amount of substance of II11 to the amount of substance of III5 was 1:1:1; in Example 22, the ratio of the amount of substance of I5 to the amount of substance of II11 to the amount of substance of III5 to the amount of substance of IV5 was 1:1:1:1; and in Example 43, the ratio of the amount of substance of lithium bis(fluorosulfonyl)imide to the amount of substance of lithium difluoro(oxalato)borate was 1:1.

The parameters of the electrolyte solutions of Examples 1-43 of the present application and Comparative Examples 1-3 are as shown in Table 1.

**Table 1**

| | First diluent | Lithium salt | Solvent | Second diluent | Amount of substance of lithium salt mol | Amount of substance of solvent m mol | Amount of substance of first diluent p mol | Amount of substance of second diluent q mol | Ratio of amount of substance of lithium salt to that of solvent | Ratio b of amount of substance of second diluent to that of first diluent | m (p-q) |
|---|---|---|---|---|---|---|---|---|---|---|---|
| Example 1 | I1 | Lithium bis(fluorosulfonyl)imide | Ethylene glycol dimethyl ether | / | 0.1 | 0.2 | 0.5 | 0 | 1:2 | 0 | 0.4 |
| Example 2 | I5 | Lithium bis(fluorosulfonyl)imide | Ethylene glycol dimethyl ether | / | 0.1 | 0.2 | 0.5 | 0 | 1:2 | 0 | 0.4 |
| Example 3 | 19 | Lithium bis(fluorosulfonyl)imide | Ethylene glycol dimethyl ether | / | 0.1 | 0.2 | 0.5 | 0 | 1:2 | 0 | 0.4 |
| Example 4 | 17 | Lithium bis(fluorosulfonyl)imide | Ethylene glycol dimethyl ether | / | 0.1 | 0.2 | 0.5 | 0 | 1:2 | 0 | 0.4 |
| Example 5 | I11 | Lithium bis(fluorosulfonyl)imide | Ethylene glycol dimethyl ether | / | 0.1 | 0.2 | 0.5 | 0 | 1:2 | 0 | 0.4 |
| Example 6 | II1 | Lithium bis(fluorosulfonyl)imide | Ethylene glycol dimethyl ether | / | 0.1 | 0.2 | 0.5 | 0 | 1:2 | 0 | 0.4 |
| Example 7 | II5 | Lithium bis(fluorosulfonyl)imide | Ethylene glycol dimethyl ether | / | 0.1 | 0.2 | 0.5 | 0 | 1:2 | 0 | 0.4 |
| Example 8 | IIIl | Lithium bis(fluorosulfonyl)imide | Ethylene glycol dimethyl ether | / | 0.1 | 0.2 | 0.5 | 0 | 1:2 | 0 | 0.4 |
| Example 9 | II4 | Lithium bis(fluorosulfonyl)imide | Ethylene glycol dimethyl ether | / | 0.1 | 0.2 | 0.5 | 0 | 1:2 | 0 | 0.4 |
| Example 10 | 118 | Lithium bis(fluorosulfonyl)imide | Ethylene glycol dimethyl ether | / | 0.1 | 0.2 | 0.5 | 0 | 1:2 | 0 | 0.4 |
| Example 11 | III1 | Lithium bis(fluorosulfonyl)imide | Ethylene glycol dimethyl ether | / | 0.1 | 0.2 | 0.5 | 0 | 1:2 | 0 | 0.4 |
| Example 12 | III5 | Lithium bis(fluorosulfonyl)imide | Ethylene glycol dimethyl ether | / | 0.1 | 0.2 | 0.5 | 0 | 1:2 | 0 | 0.4 |
| Example 13 | III12 | Lithium bis(fluorosulfonyl)imide | Ethylene glycol dimethyl ether | / | 0.1 | 0.2 | 0.5 | 0 | 1:2 | 0 | 0.4 |
| Example 14 | III3 | Lithium bis(fluorosulfonyl)imide | Ethylene glycol dimethyl ether | / | 0.1 | 0.2 | 0.5 | 0 | 1:2 | 0 | 0.4 |
| Example 15 | III8 | Lithium bis(fluorosulfonyl)imide | Ethylene glycol dimethyl ether | / | 0.1 | 0.2 | 0.5 | 0 | 1:2 | 0 | 0.4 |
| Example 16 | IV1 | Lithium bis(fluorosulfonyl)imide | Ethylene glycol dimethyl ether | / | 0.1 | 0.2 | 0.5 | 0 | 1:2 | 0 | 0.4 |
| Example 17 | IV5 | Lithium bis(fluorosulfonyl)imide | Ethylene glycol dimethyl ether | / | 0.1 | 0.2 | 0.5 | 0 | 1:2 | 0 | 0.4 |
| Example 18 | IV4 | Lithium bis(fluorosulfonyl)imide | Ethylene glycol dimethyl ether | / | 0.1 | 0.2 | 0.5 | 0 | 1:2 | 0 | 0.4 |
| Example 19 | IV6 | Lithium bis(fluorosulfonyl)imide | Ethylene glycol dimethyl ether | / | 0.1 | 0.2 | 0.5 | 0 | 1:2 | 0 | 0.4 |
| Example 20 | I5-III5 | Lithium bis(fluorosulfonyl)imide | Ethylene glycol dimethyl ether | / | 0.1 | 0.2 | 0.5 | 0 | 1:2 | 0 | 0.4 |
| Example 21 | I5-II11-III5 | Lithium bis(fluorosulfonyl)imide | Ethylene glycol dimethyl ether | / | 0.1 | 0.2 | 0.5 | 0 | 1:2 | 0 | 0.4 |
| Example 22 | I5-II11-III5-IV5 | Lithium bis(fluorosulfonyl)imide | Ethylene glycol dimethyl ether | / | 0.1 | 0.2 | 0.5 | 0 | 1:2 | 0 | 0.4 |
| Example 23 | I5 | Lithium bis(fluorosulfonyl)imide | Ethylene glycol dimethyl ether | / | 0.1 | 0.2 | 0.333 | 0 | 1:2 | 0 | 0.6 |
| Example 24 | I5 | Lithium bis(fluorosulfonyl)imide | Ethylene glycol dimethyl ether | / | 0.1 | 0.2 | 0.167 | 0 | 1:2 | 0 | 1.2 |
| Example 25 | I5 | Lithium bis(fluorosulfonyl)imide | Ethylene glycol dimethyl ether | / | 0.1 | 0.2 | 1 | 0 | 1:2 | 0 | 0.2 |
| Example 26 | I5 | Lithium bis(fluorosulfonyl)imide | Ethylene glycol dimethyl ether | / | 0.1 | 0.2 | 0.1 | 0 | 1:2 | 0 | 2 |
| Example 27 | I5 | Lithium bis(fluorosulfonyl)imide | Ethylene glycol dimethyl ether | / | 0.25 | 0.2 | 0.5 | 0 | 1:0.8 | 0 | 0.4 |
| Example 28 | I5 | Lithium bis(fluorosulfonyl)imide | Ethylene glycol dimethyl ether | / | 0.2 | 0.2 | 0.5 | 0 | 1:1 | 0 | 0.4 |
| Example 29 | I5 | Lithium bis(fluorosulfonyl)imide | Ethylene glycol dimethyl ether | / | 0.067 | 0.2 | 0.5 | 0 | 1:3 | 0 | 0.4 |
| Example 30 | I5 | Lithium bis(fluorosulfonyl)imide | Ethylene glycol dimethyl ether | 1,1,2,2-Tetrafluor octhyl-2,2,3,3-tetrafluor opropyl ether | 0.1 | 0.2 | 0.111 | 0.222 | 1:2 | 2 | 0.6 |
| Example 31 | I5 | Lithium bis(fluorosulfonyl)imide | Ethylene glycol dimethyl ether | 1,1,2,2-Tetrafluor octhyl-2,2,3,3-tetrafluor opropyl ether | 0.1 | 0.2 | 0.167 | 0.167 | 1:2 | 1 | 0.6 |
| Example 32 | I5 | Lithium bis(fluorosulfonyl)imide | Ethylene glycol dimethyl ether | 1,1,2,2-Tetrafluor oethyl-2,2,3,4-tetrafluor opropyl ether | 0.1 | 0.2 | 0.222 | 0.111 | 1:2 | 0.5 | 0.6 |
| Example 33 | I5 | Lithium bis(fluorosulfonyl)imide | Ethylene glycol dimethyl ether | 1,1,2,2-Tetrafluor oethyl-2,2,3,3-tetrafluor opropyl ether | 0.1 | 0.2 | 0.303 | 0.03 | 1:2 | 0.1 | 0.6 |
| Example 34 | I5 | Lithium bis(fluorosulfonyl)imide | Ethylene glycol dimethyl ether | Bis(2,2,2-trifluoroe thyl) ether | 0.1 | 0.2 | 0.167 | 0.167 | 1:2 | 1 | 0.6 |
| Example 35 | I5 | Lithium bis(fluorosulfonyl)imide | Ethylene glycol dimethyl ether | Benzene | 0.1 | 0.2 | 0.167 | 0.167 | 1:2 | 1 | 0.6 |
| Example 36 | I5 | Lithium bis(fluorosulfonyl)imide | Ethylene glycol dimethyl ether | 1,1,2,2-Tetrafluor oethyl-2,2,2-trifluoroe thyl ether | 0.1 | 0.2 | 0.167 | 0.167 | 1:2 | 1 | 0.6 |
| Example 37 | I5 | Lithium bis(fluorosulfonyl)imide | Ethylene glycol dimethyl ether | 1-(1,1,2,2-tetrafluor oethoxy) propane | 0.1 | 0.2 | 0.167 | 0.167 | 1:2 | 1 | 0.6 |
| Example 38 | I5 | Lithium bis(fluorosulfonyl)imide | 1,2-Dimethoxypropane | / | 0.1 | 0.2 | 0.333 | 0 | 1:2 | 0 | 0.6 |
| Example 39 | I5 | Lithium bis(fluorosulfonyl)imide | 1,3-Dimethoxypropane | / | 0.1 | 0.2 | 0.333 | 0 | 1:2 | 0 | 0.6 |
| Example 40 | I5 | Lithium bis(fluorosulfonyl)imide | Ethylene glycol diethyl ether | / | 0.1 | 0.2 | 0.333 | 0 | 1:2 | 0 | 0.6 |
| Example 41 | I5 | Lithium difluoro(oxalato)borate | Ethylene glycol dimethyl ether | / | 0.1 | 0.2 | 0.5 | 0 | 1:2 | 0 | 0.4 |
| Example 42 | I5 | Lithium bis (trifluoromethanesulfonyl)i mide | Ethylene glycol dimethyl ether | / | 0.1 | 0.2 | 0.5 | 0 | 1:2 | 0 | 0.4 |
| Example 43 | I5 | Lithium bis(fluorosulfonyl) imide + lithium difluoro(oxalato)borate | Ethylene glycol dimethyl ether | / | 0.1 | 0.2 | 0.5 | 0 | 1:2 | 0 | 0.4 |

| | | | | | | | | | | | |
|---|---|---|---|---|---|---|---|---|---|---|---|
| Comparative Example 1 | Fluorobenzene | Lithium bis(fluorosulfonyl) imide | Ethylene glycol dimethyl ether | 1,1,2,2-Tetrafluoroethyl-2,2,3,3-tetrafluoropropyl ether | 0.1 | 0.2 | 0.111 | 0.222 | 1:2 | 2 | 0.6 |
| Comparative Example 2 | / | Lithium bis(fluorosulfonyl) imide | Ethylene glycol dimethyl ether | / | 0.1 | 0.2 | 0 | 0 | 1:2 | / | / |
| Comparative Example 3 | / | Lithium bis(fluorosulfonyl) imide | Ethylene glycol dimethyl ether | 1,1,2,2-Tetrafluoroethyl-2,2,3,3-tetrafluoropropyl ether | 0.1 | 0.2 | 0 | 0.5 | 1:2 | / | 0.4 |

| | | | | | | | | | | | |
|---|---|---|---|---|---|---|---|---|---|---|---|
| In Table 1, "/" represents no addition. | | | | | | | | | | | |

The structural formula of the first diluent used in Table 1 is as shown in Table 2.

**Table 2**

| | First diluent | Structural formula of first diluent | | First diluent | Structural formula of first diluent |
|---|---|---|---|---|---|
| Example 1 | I1 | 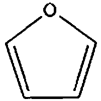 | Example 24 | I5 | 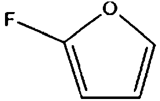 |
| Example 2 | I5 | 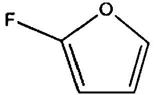 | Example 25 | I5 | 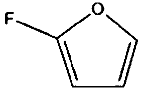 |
| Example 3 | I9 | 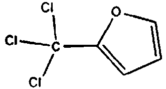 | Example 26 | I5 | 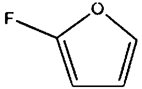 |
| Example 4 | I7 | 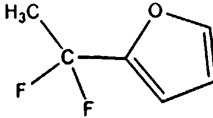 | Example 27 | I5 | 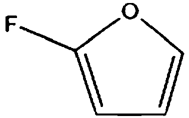 |
| Example 5 | I11 | 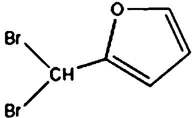 | Example 28 | I5 | 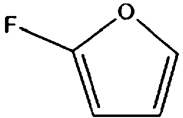 |
| Example 6 | II1 | 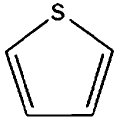 | Example 29 | I5 | 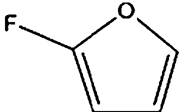 |
| Example 7 | I15 | 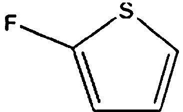 | Example 30 | I5 | 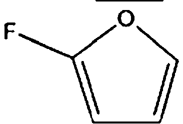 |
| Example 8 | II11 | 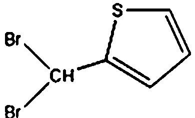 | Example 31 | I5 | 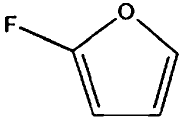 |
| | | | | | |
| Example 9 | II4 | 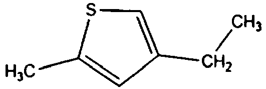 | Example 32 | I5 | 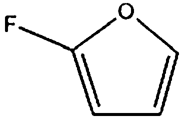 |
| Example 10 | II8 | 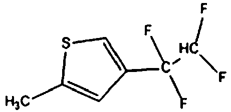 | Example 33 | I5 | 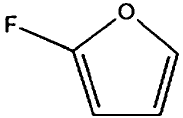 |
| Example 11 | III1 | 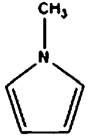 | Example 34 | I5 | 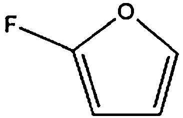 |
| Example 12 | III5 | 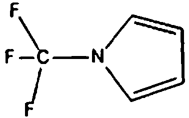 | Example 35 | I5 | 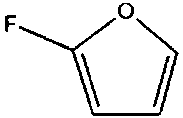 |
| Example 13 | III12 | 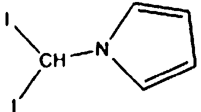 | Example 36 | I5 | 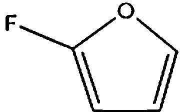 |
| Example 14 | III3 | 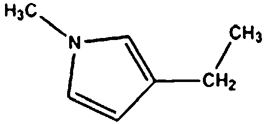 | Example 37 | I5 | 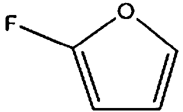 |
| Example 15 | III8 | 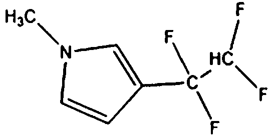 | Example 38 | I5 | 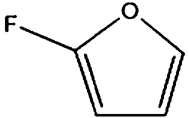 |
| Example 16 | IV1 | 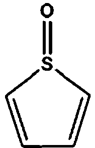 | Example 39 | I5 | 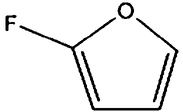 |
| Example 17 | IV5 | 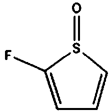 | Example 40 | I5 | 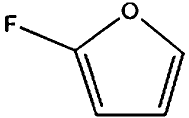 |
| Example 18 | IV4 | 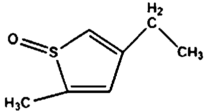 | Example 41 | I5 | 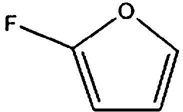 |
| Example 19 | IV6 | 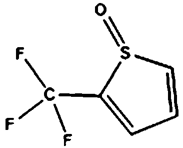 | Example 42 | I5 | 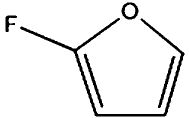 |
| Example 20 | I5-III5 | 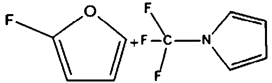 | Example 43 | I5 | 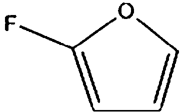 |
| Example 21 | I5-II11-III5 | 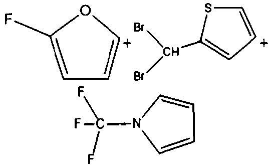 | Comparative Example 1 | Fluorobenzene | 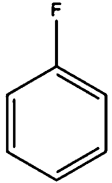 |
| Example 22 | I5-II11-III5-IV5 | 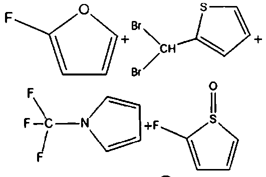 | Comparative Example 2 | / | / |
| Example 23 | I5 | 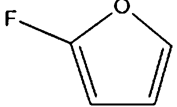 | Comparative Example 3 | / | / |

### Performance test:

### 1. Scanning electron microscope image

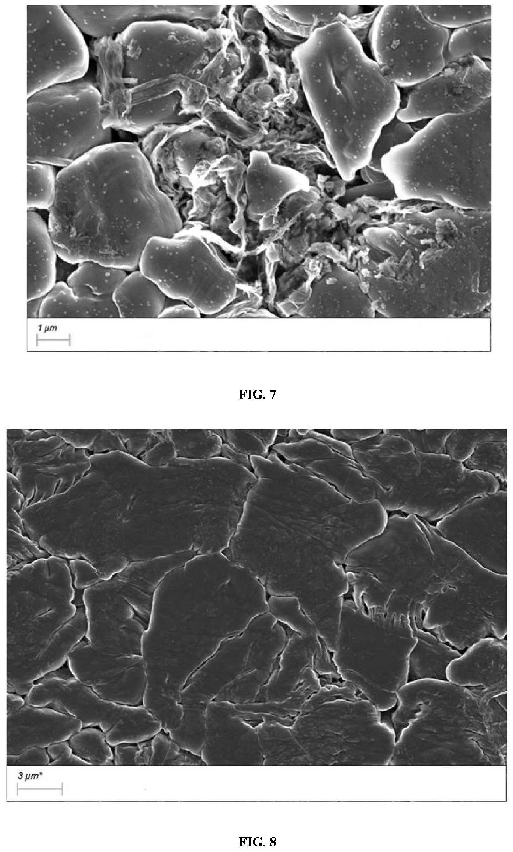

The environment temperature for the cycling of the secondary batteries of Examples 1, 2 and 14 was set to 25°C, and charge-discharge cycling was performed at a rate of 0.5 C (i.e., 70 mA). The cut-off voltages for charge and discharge were set to 4.3 V and 2.8 V respectively. After 30 cycles, the secondary batteries were disassembled and scanning electron microscope images were taken of the negative electrode plates of the batteries, as shown in FIGs. 6-8, respectively.

As can be seen from FIGs. 6-8, after the secondary batteries of Examples 1, 2 and 14 of the present application were cycled for 30 cycles, no clear dendritic metallic lithium was observed under the scanning electron microscope of the negative electrode plate. It can be seen that the use of the lithium metal negative electrode and electrolyte solution of the present application can reduce the probability of lithium dendrites in the lithium metal negative electrode plate and reduce the attenuation of the life of the battery caused by lithium consumption.

### 2. Test for cycling life of battery

Taking Example 1 as an example, the environment temperature for the cycling of the secondary battery was set to 25°C, and charge-discharge cycling was performed at a rate of 0.5 C (i.e., 70 mA). The cut-off voltages for charge and discharge were set to 4.3 V and 2.8 V respectively. When the discharge capacity decayed to 80% of the first cycle discharge capacity, the life of the battery was considered to be over, and the number of cycles at this time was recorded. The results of the cycling life test of Examples 1-43 and Comparative Examples 1-3 are shown in Table 3.

**Table 3**

| | Number of cycles |
|---|---|
| Example 1 | 340 |
| Example 2 | 413 |
| Example 3 | 452 |
| Example 4 | 380 |
| Example 5 | 364 |
| Example 6 | 365 |
| Example 7 | 388 |
| Example 8 | 405 |
| Example 9 | 379 |
| Example 10 | 402 |
| Example 11 | 425 |
| Example 12 | 505 |
| Example 13 | 446 |
| Example 14 | 400 |
| Example 15 | 437 |
| Example 16 | 442 |
| Example 17 | 456 |
| Example 18 | 442 |
| Example 19 | 456 |
| Example 20 | 420 |
| Example 21 | 462 |
| Example 22 | 425 |
| Example 23 | 542 |
| Example 24 | 394 |
| Example 25 | 460 |
| Example 26 | 368 |
| Example 27 | 358 |
| Example 28 | 360 |
| Example 29 | 354 |
| Example 30 | 415 |
| Example 31 | 461 |
| Example 32 | 487 |
| Example 33 | 432 |
| Example 34 | 425 |
| Example 35 | 467 |
| Example 36 | 447 |
| Example 37 | 458 |
| Example 38 | 557 |
| Example 39 | 585 |
| Example 40 | 526 |
| Example 41 | 385 |
| Example 42 | 370 |
| Example 43 | 402 |
| Comparative Example 1 | 260 |
| Comparative Example 2 | 102 |
| Comparative Example 3 | 180 |

As can be seen from Table 3, in Examples 2-43 of the present application, the first diluent is used in the electrolyte solution, and the cycling performance of the battery is excellent. In Comparative Example 1, the first diluent in the electrolyte solution is fluorobenzene; in Comparative Example 2, no diluent is added to the electrolyte solution; in Comparative Example 3, only the second diluent is used in the electrolyte solution, so that the cycling performance of the batteries is significantly lower than that of Examples 2-43. This is because, in Example 2-43, due to the addition of the first diluent, the two conjugated double bonds on the five-membered ring can delocalize the lone pair of electrons of the heteroatom, significantly weakening the ability of the first diluent to dissolve the lithium salt, improving the antioxidant properties of the first diluent, reducing the viscosity of the electrolyte solution, and improving wettability, thus improving the cycling performance of the battery containing same.

The cycling performance of the batteries of Example 2-43 is better than that of Example 1. This is because Examples 2-5 contain halogen or haloalkyl, which can improve the redox stability of the electrolyte solution and reduce the flammability of the electrolyte solution. The first diluent containing a halogen results in the formation of an SEI film with a better stability and a high conductivity, which can further improve the cycling life of the secondary battery. The substances corresponding to Examples 6-21 are used as diluents, causing the effects of the five-membered ring and the conjugated double bonds to be stronger, and the antioxidant performance is better, which can further improve the cycling life of the secondary battery. The corresponding ratios or material selections in Examples 22-43 have a more clear effect of matching with the diluent, resulting in a better stability of the electrolyte solution, so that the cycling life of the secondary battery can be further improved.

In addition, comparing Example 1 with Examples 2-5, there is no substituent on the five-membered ring, and the five-membered ring of Examples 2-5 has substitution with an electron-withdrawing group or haloalkyl having 1-3 carbon atoms, so that the cycling performance of the secondary batteries of Examples 2-5 is further improved. By the same reasoning, comparing Example 6 with Examples 7-10, there is no substituent on the five-membered ring, and the five-membered ring in Examples 7-10 has substitution with an electron-withdrawing group or haloalkyl with 1-3 carbon atoms, so that the cycling performance of the secondary batteries of Examples 7-10 is further improved; comparing Examples 11 and 14 with Examples 12, 13, and 15, the five-membered ring has no substitution with an electron-withdrawing group or haloalkyl with 1-3 carbon atoms, so that the cycling performance of the secondary batteries of Examples 12, 13, and 15 is further improved; and comparing Example 16 with Examples 17-19, there is no substituent on the five-membered ring, and the five-membered ring in Examples 17-19 has substitution with an electron-withdrawing group or haloalkyl with 1-3 carbon atoms, so that the cycling performance of the secondary batteries of Examples 17-19 is further improved. It can be seen that haloalkyl having 1-3 carbon atoms, F, Cl, Br, I, and other substituents on the five-membered ring can improve the cycling life of the secondary battery.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery, comprising an electrolyte solution, wherein the electrolyte solution comprises a first diluent, the first diluent comprising at least one of compounds represented by formulas I to IV: 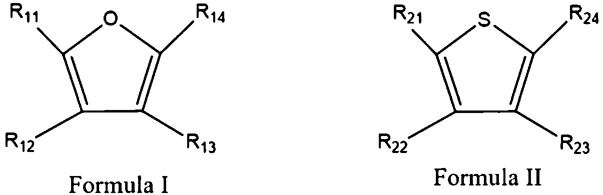 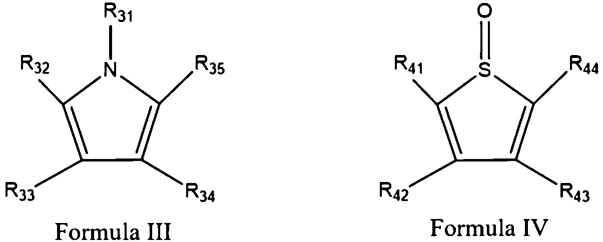
where in formula I, R₁₁, R₁₂, R₁₃, and R₁₄ each independently comprise any one of H, F, Cl, Br, I, alkyl having 1-3 carbon atoms, and a haloalkyl having 1-3 carbon atoms, and at least one of R₁₁, R₁₂, R₁₃, and R₁₄ comprises any one of haloalkyl having 1-3 carbon atoms, F, Cl, Br and I;
in formula II, R₂₁, R₂₂, R₂₃, and R₂₄ are each independently selected from any one of H, F, Cl, Br, I, alkyl having 1-3 carbon atoms, and haloalkyl having 1-3 carbon atoms;
in formula III, R₃₁, R₃₂, R₃₃, R₃₄, and R₃₅ are each independently selected from any one of H, F, Cl, Br, I, alkyl having 1-3 carbon atoms, and haloalkyl having 1-3 carbon atoms; and
in formula IV, R₄₁, R₄₂, R₄₃, and R₄₄ are each independently selected from any one of H, F, Cl, Br, I, alkyl having 1-3 carbon atoms, and haloalkyl having 1-3 carbon atoms.

2. The battery according to claim 1, wherein in formula II, at least one of R₂₁, R₂₂, R₂₃, and R₂₄ comprises any one of haloalkyl having 1-3 carbon atoms, F, Cl, Br, and I; and/or
in formula III, at least one of R₃₁, R₃₂, R₃₃, R₃₄, and R₃₅ comprises any one of haloalkyl having 1-3 carbon atoms, F, Cl, Br, and I; and/or,
in formula IV, at least one of R₄₁, R₄₂, R₄₃, and R₄₄ comprises any one of haloalkyl having 1-3 carbon atoms, F, Cl, Br, and I.

3. The battery according to claim 1, wherein the compound represented by formula I includes at least one of compounds I5 to I12:

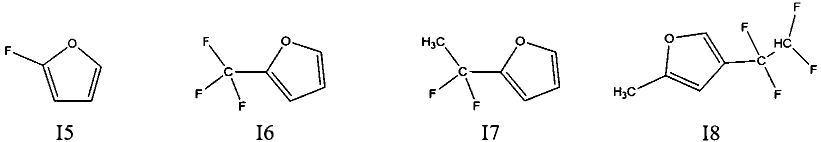

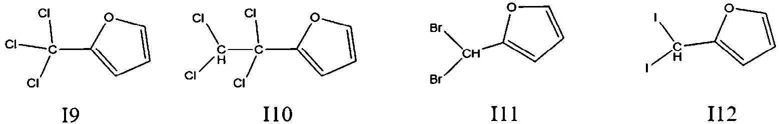

4. The battery according to claim 1, wherein the compound represented by formula II includes at least one of compounds II1 to II12:

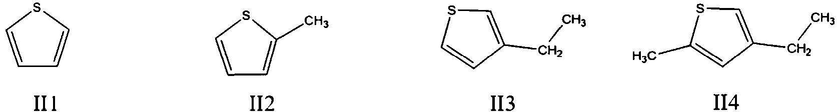

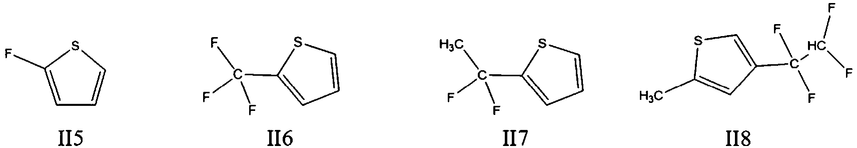

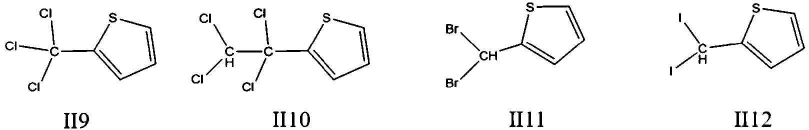

5. The battery according to claim 1, wherein the compound represented by formula III includes at least one of compounds III1 to III12:

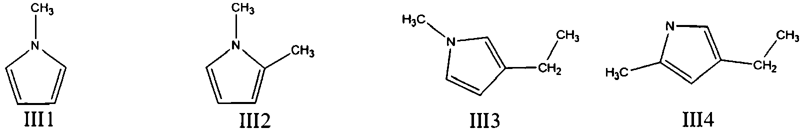

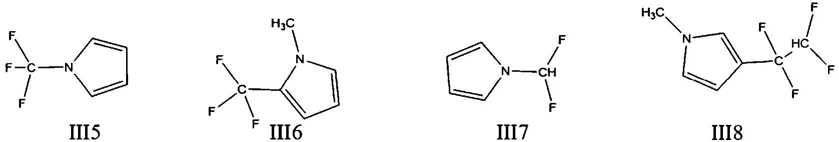

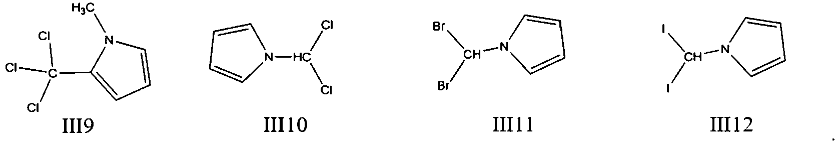

6. The battery according to claim 1, wherein the compound represented by formula IV includes at least one of compounds IV1 to IV12:

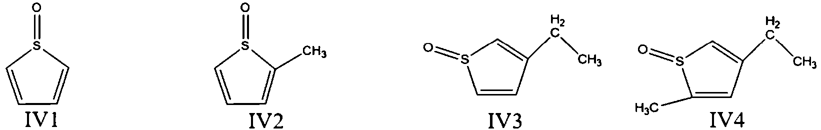

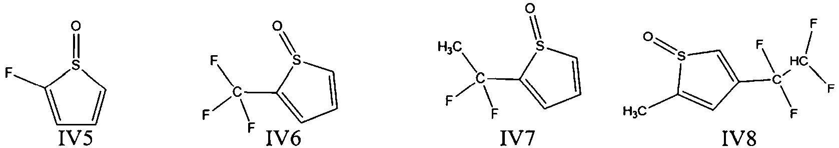

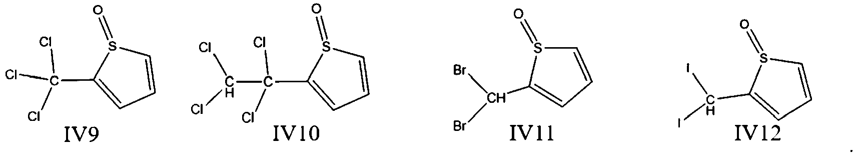

7. The battery according to any one of claims 1-6, wherein the electrolyte solution further comprises a lithium salt, the lithium salt including at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, or lithium tetrafluoro(oxalato)phosphate.

8. The battery according to any one of claims 1-7, wherein the electrolyte solution further comprises a solvent, the solvent including at least one of methyl n-butyl ether, tetrahydrofuran, ethylene glycol dimethyl ether, ethylene glycol diethyl ether, propylene glycol dimethyl ether, 1,2-dimethoxypropane, or 1,3-dimethoxypropane.

9. The battery according to any one of claims 1-8, wherein the electrolyte solution further comprises a solvent, and the ratio of the amount of substance of the solvent to the amount of substance of the first diluent is 0.2-2.

10. The battery according to any one of claims 1-9, wherein the electrolyte solution further comprises a lithium salt and a solvent, and the ratio of the amount of substance of the lithium salt to the amount of substance of the solvent is 1:(0.8-3).

11. The battery according to claim 10, wherein the electrolyte solution further comprises a second diluent, the second diluent including at least one of 1,1,2,2-tetrafluoroethyl-2,2,3,3-tetrafluoropropyl ether, 1,1,2,2-tetrafluoroethyl-2,2,2-trifluoroethyl ether, 1-(1,1,2,2-tetrafluoroethoxy)propane, 1,1,2,2-tetrafluoroethyl ethyl ether, bis(2,2,2-trifluoroethyl) ether, benzene, or anisole.

12. The battery according to claim 11 , wherein in the electrolyte solution, the ratio of the amount of substance of the second diluent to the amount of substance of the first diluent is b, with 0 < b ≤ 2.

13. The battery according to claim 11, wherein in the electrolyte solution, the amount of substance of the solvent is m, the amount of substance of the first diluent is p, and the amount of substance of the second diluent is q, with 0.2 ≤ m/(p+q) ≤ 2.

14. The battery according to any one of claims 1-13, wherein the battery comprises a lithium metal negative electrode plate comprising a negative electrode current collector and an active material layer arranged on at least part of a surface of the negative electrode current collector, and the active material layer comprises at least one of elemental lithium metal or a lithium metal alloy.

15. The battery according to claim 14, wherein the lithium metal alloy has a chemical formula of LiR, where R includes at least one of tin, zinc, aluminum, magnesium, silver, gold, gallium, indium, platinum, boron, carbon, or silicon.

16. An electrical device, comprising the battery according to any one of claims 1-15.
